# EUROPÄISCHE PATENTSCHRIFT

(11) **EP 1 619 804 B1**
(45) Veröffentlichungstag und Bekanntmachung des Hinweises auf die Patenterteilung: **12.12.2007**
(21) Anmeldenummer: 05105017.7
(22) Anmeldetag: 08.06.2005
(51) Int. Cl.: H04B 1/16, H04H 1/00, H04H 5/00

(54) **Gerät zum Empfang von frequenzmodulierten Rundfunksignalen**
Device for receiving frequency-modulated broadcast signals
Dispositif pour la réception des signaux de radiodiffusion modulés en fréquence

(30) Priorität: 22.07.2004 DE 102004035518
(43) Veröffentlichungstag der Anmeldung: 25.01.2006
(73) Patentinhaber: ROBERT BOSCH GMBH, 70442 Stuttgart (DE)
(72) Erfinder: Tran, Manh-Thang, 31135, Hildesheim (DE); Risse, Marcus, 31139, Hildesheim (DE)

(56) Entgegenhaltungen:
- EP-A- 0 854 598
- DE-A1- 3 243 146
- US-A1- 2002 172 369

## Beschreibung

Die Erfindung betrifft ein FM-Empfangsgerät für frequenzmodulierte Rundfunksignale, die einen Pilotton auf einer definierten Frequenz haben.

Bei frequenzmodulierten Rundfunksignalen wird ein sogenanntes Multiplexsignal MPX frequenzmoduliert. Das MPX-Signal sieht bei einer Frequenz von 19 kHz einen sogenannten Pilotton zur Rückgewinnung eines Hilfsträgers im Empfänger vor. Dies ist für die Übertragung von Stereosignalen hilfreich, die durch Addition und Subtraktion der Audiosignale des rechten und linken Kanals, z. B. vom rechten und linken Mikrofon gebildet werden. Das Summensignal der Audiosignale wird auf einem Tonfrequenzband von 30 Hz bis 15 kHz übertragen. Das Differenzsignal der Audiosignale wird mit einem Hilfsträger von 38 kHz gemischt und als sogenanntes Hilfssignal übertragen. Der Hilfsträger wird bei der Modulation unterdrückt. Da zur einfachen Demodulation der Hilfsträger benötigt wird, wird die halbe Frequenz des Hilfsträgers als Pilotton mit kleiner Amplitude übertragen. Die Pilottonfrequenz ermöglicht damit die Rückgewinnung des Hilfsträgers im Empfänger.

Das vollständige Stereo-Multiplexsignal besteht somit aus dem Summensignal, dem Hilfssignal und der Pilottonfrequenz.

Weiterhin wird eine Verkehrsfunk-Kennfrequenz übertragen, um einen Sender für den Verkehrsfunk kenntlich zu machen. Diese Verkehrsfunk-Kennfrequenz entspricht der dreifachen Pilotfrequenz. Die Autofahrer-Rundfunk-Information ARI wurde durch das Radio-Daten-System RDS durch digitale Informationsübertragung erweitert. Als Radio-Daten-System-Informationen werden von den Sendern, die mit dem Radio-Daten-System ausgerüstet sind, weiterhin eine Programmkennung, alternative Frequenzen von Sendern, die das gleiche Programm ausstrahlen, Verkehrsfunkkennungen und Verkehrsdurchsagekennungen übermittelt. Weitere Zusatzinformationen, wie Anzeige der Programmart, Musik-Sprache-Kennung, Programmbeitragskennung zum zeitrichtigen Einschalten von Empfängern oder Recordern, Radiotext und Uhrzeit, sind möglich.

Die Datenübertragung im Radio-Daten-System erfolgt synchron in Blöcken, wobei das RDS-Signal auf den Verkehrsfunk-Kennfrequenzträger von 57 kHz aufmoduliert und zum FM-Multiplexsignal addiert wird.

Bei FM-Rundfunkempfängern kann es durch unzureichende Frequenzplanung, Überreichweiten oder in Grenzlagen zum so genannten Gleichkanalempfang kommen. Hierbei sind auf der gewählten Empfangsfrequenz zwei Sender mit ähnlicher Feldstärke empfangbar. Beide Sender sind je nach Standort und Feldstärke wechselweise hörbar, wobei der Übergang von einem Sender zum anderen hörbar gestört erfolgt.

Bei adaptiven Mehrantennensystemen, wie zum Beispiel sogenannten "Digital-Directional-Antenna"-Systemen, kann durch die Kombination mehrerer Antennensignale eine Richtwirkung erzielt werden, die zum Ausblenden eines Störsenders geeignet ist. Dabei kann allerdings nicht zwischen Nutzsender und Störsender unterschieden werden, so dass es zu einem abrupten Übergang zwischen Nutzsender und Störsender bzw. umgekehrt kommen kann. In diesem Fall ist die Detektion einer Störung mit herkömmlichen Empfangsqualitätsdetektoren nur für einen sehr kurzen Moment oder teilweise gar nicht möglich.

Der abrupte Übergang zwischen den Modulationen wird vom Hörer als ungewohnt oder als Fehlfunktion empfunden.

DE 32 43 146 A1 offenbart einen Detektor zum Anzeigen von Empfangsstörungen beim UKW-Rundfunkempfang. Eine Selektionseinheit filtert ausschließlich Signalanteile, die in Signal-Frequenzlücken des ausgesendeten Rundfunksignals oberhalb des Hörfrequenzbereichs und unterhalb 23 kHz nach der Demodulation auftreten.

Aufgabe der Erfindung ist es daher, ein verbessertes FM-Empfangsgerät für frequenzmodulierte Rundfunksignale zu schaffen, das eine gezielte Detektion von Gleichkanalstörungen ermöglicht.

Die Aufgabe wird mit dem gattungsgemäßen FM-Empfangsgerät erfindungsgemäß gelöst durch einen Störungsdetektor, der zur Detektion einer Empfangsstörung aus einer Abweichung der Pilottonablage von einem Sollwert eingerichtet ist, wobei die Pilottonablage die Differenz des demodulierten Pilottons mit einer Pilotton-Referenzfrequenz ist, und mit einem auf die definierte Frequenz einstellbaren Oszillator im Empfangsgerät zur Erzeugung der Pilotton-Referenzfrequenz.

Dabei wird ausgenutzt, dass die von den unterschiedlichen Senderstandorten ausgestrahlten FM-Rundfunksignale leicht unterschiedliche Pilottonfrequenzen aufweisen. Durch die zwar geringen aber doch messbaren Toleranzen der Pilottonfrequenz ist ein Unterscheidungskriterium zwischen Nutzsender und Störsender gegeben.

Da der Pilotton bei FM-Rundfunksignalen immer ausgesendet wird und auswertbar ist, kann eine zuverlässige Störungsdetektion gewährleistet werden.

Eine wesentlich einfachere Störungsdetektion durch Unterscheidung von Nutzsender und Störsender könnte zwar mit Hilfe der RDS-Information erfolgen, die unter anderem die Programmkennung beinhaltet. Das RDS-Signal ist aber nicht in jedem Falle dekodierbar und nutzbar, so dass im Falle von Empfangsstörungen oder für den Fall, dass ein Sender keine RDS-Information überträgt, keine Gleichkanalstörungsdetektion erfolgen kann.

Die Pilottonablage wird vorzugsweise mit Hilfe eines Mischers gewonnen, der zum Mischen des Rundfunksignals mit der Pilotton-Referenzfrequenz dient.

Vorteilhaft ist es, wenn ein Taktzähler zur Bestimmung eines zu der Periodenlänge der Pilottonablage proportionalen Wertes vorgesehen ist. Der Taktzähler wird dabei so gesteuert, dass der Taktzähler bei einem Nulldurchgang des Signals für die Pilottonablage gestartet und bei einem folgenden Nulldurchgang gestoppt wird. Die gezählten Takte werden dann als Pilottonablagewert ausgelesen und der Taktzähler wieder auf Null gesetzt. Damit steht ein digital weiter zu verarbeitender Wert für die Pilottonablage zur Verfügung.

Vorteilhaft ist es, einen ersten Tiefpassfilter zur Tiefpassfilterung des gemischten Rundfunksignals vorzusehen. Der Tiefpassfilter sollte dabei auf einen Frequenzbereich von wenigen Hertz eingestellt werden, um die Pilottonablage aus dem Mischsignal zu extrahieren.

Weiterhin ist es vorteilhaft, einen herkömmlich bekannten Empfangsqualitätsdetektor zur Detektion weiterer Empfangsstörungen zu nutzen. Der Empfangsqualitätsdetektor wird dabei mit dem Störungsdetektor verbunden und der Störungsdetektor von dem Empfangsqualitätsdetektor so gesteuert, dass ein ermittelter, die Pilottonablage repräsentierender Wert nicht berücksichtigt wird, wenn eine Empfangsstörung durch den Empfangsqualitätsdetektor detektiert wird.

Damit kann sichergestellt werden, dass nur Unterschiede der Pilottonablage ausgewertet werden, die durch Gleichkanalempfang hervorgerufen wurden. Empfangsstörungen, wie zum Beispiel Mehrwegeausbreitung oder Nachbarkanäle, die zu gestörten Messwerten der Pilottonablage führen und durch herkömmliche Empfangsqualitätsdetektoren angezeigt werden, können auf diese Weise bei der Störungsdetektion durch Auswertung der Pilottonablage herausgefiltert werden.

Vorzugsweise ist ein zweiter Tiefpassfilter zur Tiefpassfilterung des Pilottonablagewert-Signals vorgesehen, um den Sollwert zu erhalten. Durch die Tiefpassfilterung der Folge von Pilottonablagen wird nämlich ein sich nur langsam ändernder Pilottonablagewert erhalten. Dies hat den Vorteil, dass der Sollwert nachgeführt wird.

In einer Ausführungsform hat der Störungsdetektor einen Zähler zur Erzeugung eines Kontrollwertes. Der Zähler wird inkrementiert, wenn der Pilottonablagewert außerhalb eines vorgegebenen Toleranzbereichs des Sollwertes, zum Beispiel 5%, liegt, und wobei der Zähler dekrementiert wird, wenn der Pilottonablagewert innerhalb des vorgegebenen Toleranzbereiches des Sollwertes liegt. Der Störungsdetektor leitet eine Entstörungsmaßnahme des FM-Empfangsgerätes dann ein, wenn der Kontrollwert einen definierten Schwellwert überschreitet. Der Schwellwert kann beispielsweise 10 betragen, d. h. wenn der Zähler von Null in Schritten von 1 auf 10 inkrementiert ist.

Das FM-Empfangsgerät hat vorzugsweise einen Richtantennenbaustein zur Erzielung einer Richtwirkung durch Kombination mehrerer Antennensignale einer adaptiven Mehrantenneneinrichtung zum Empfangen der mehreren Antennensignale über mindestens zwei Antennen.

Als Entstörmaßnahme wird dann vorzugsweise eine Deaktivierung der die Antennencharakteristik beeinflussenden adaptiven Mehrantenneneinrichtung für eine definierte Zeitdauer, ein Einstellen des FM-Empfangsgerätes auf Mono-Wiedergabe des Rundfunksignals und ein Absenken der Höhenwiedergabe durchgeführt und der Kontrollwert wird wieder auf Null zurückgesetzt. Die Zeitdauer kann zum Beispiel eine Minute betragen. Weiterhin kann das FM-Empfangsgerät zur Auswertung von Radio-Daten-System-Informationen ausgebildet sein, um diejenige Empfangsantenne der mehreren Empfangsantennen zu ermitteln, die im Bezug auf eine Gleichkanalstörung das ungestörteste Rundfunksignal empfängt. Dann wird nur das aus der ermittelten Empfangsantenne empfangene ungestörteste Rundfunksignal im Empfangspfad des FM-Empfangsgerätes weiter genutzt. Diese zusätzliche Maßnahme ist vorteilhaft, wenn das RDS-Signal zusätzlich auswertbar.

Der Sollwert wird vorzugsweise auf den Pilottonablagewert gesetzt, wenn der Pilottonablagewert über einen festgelegten Zeitraum, vorzugsweise von 180 Sekunden, vom Sollwert abweicht oder die eingestellte Empfangsfrequenz für das Rundfunksignal verändert wurde.

Wenn sich nämlich über einen längeren Zeitraum ein konstanter, vom aktuellen Sollwert abweichender Pilottonablagewert ergibt, so hat sich die Empfangssituation geändert und ein anderer Sender als der Nutzsender ist dauerhaft empfangbar. Eine weitere Abschaltung des adaptiven Mehrantennensystems ist dann nicht sinnvoll, so dass der Sollwert mit dem aktuellen Pilottonablagewert vorgeladen wird.

Die Erfindung wird nachfolgend anhand der beigefügten Zeichnungen beispielhaft näher erläutert. Es zeigen:
Figur 1 - Frequenzband eines FM-Stereo-Multiplexsignals;
Figur 2 - Blockdiagramm eines FM-Emfpangsgerätes mit erfindungsgemäßem Störungsdetektor.

Wenn mit einem herkömmlichen FM-Empfangsgerät ein frequenzmoduliertes Rundfunksignal eines Nutzsenders empfangen wird, der durch einen Störsender auf derselben Frequenz beeinflusst wird, kann der Nutzsender störungsfrei empfangen werden, falls eine Empfangsfeldstärke deutlich größer als die des Störsenders ist. Ist die Empfangsfeldstärke des Störsenders deutlich größer als die des Nutzsenders, so wird der Störsender ungestört empfangen und der Nutzsender ausgeblendet. Zusätzlich gibt es aber auch Empfangssituationen, in denen die Empfangsfeldstärke von Nutzsender und Störsender nahezu gleich ist. Dies führt zu einem gestörten Empfang. Je größer die Empfangsfeldstärke des Störsenders im Vergleich zu der Empfangsfeldstärke des Nutzsenders wird, desto größer ist der Störgrad des Nutzsenders, bis der Empfang auf den Störsender umschwenkt und der Störsender empfangen wird.

Bei einem FM-Empfangsgerät mit adaptiver Mehrantenneneinrichtung, das durch eine gezielte Kombination mehrerer Empfangsantennen die resultierende Antenntenrichtwirkung beeinflusst, stellt sich der Empfang von Gleichkanalsendern in der Regel anders als bei herkömmlichen FM-Empfangsgeräten dar. Der Übergang vom Nutzsender zum Störsender erfolgt abrupt ohne dass vorher Empfangsstörungen detektiert werden können.

Mit herkömmlichen Empfangsqualitätsdetektoren, die die Empfangsqualität anzeigen, ist die Detektion eines derartigen Übergangs vom Nutzsender zu einem störenden Gleichkanalsender nicht ausreichend gewährleistet, da das Empfangssignal sowohl des Nutzsenders als auch des Störsenders selbst störungsfrei ist.

Ein FM-Empfangsgerät kann eine Gleichkanalstörung durch Auswertung von Radio-Daten-System-Informationen eines Radio-Daten-Systems RDS erkennen, sofern diese dekodierbar sind. Wenn die RDS-Daten allerdings nicht nutzbar sind, kann eine Detektion einer Gleichkanalstörung nicht einfach erfolgen.

Bei dem erfindungsgemäßen Störungsdetektor wird der sogenannte Pilotton ausgenutzt, der auf einer Pilottonfrequenz, von 19 kHz aufmoduliert ist.

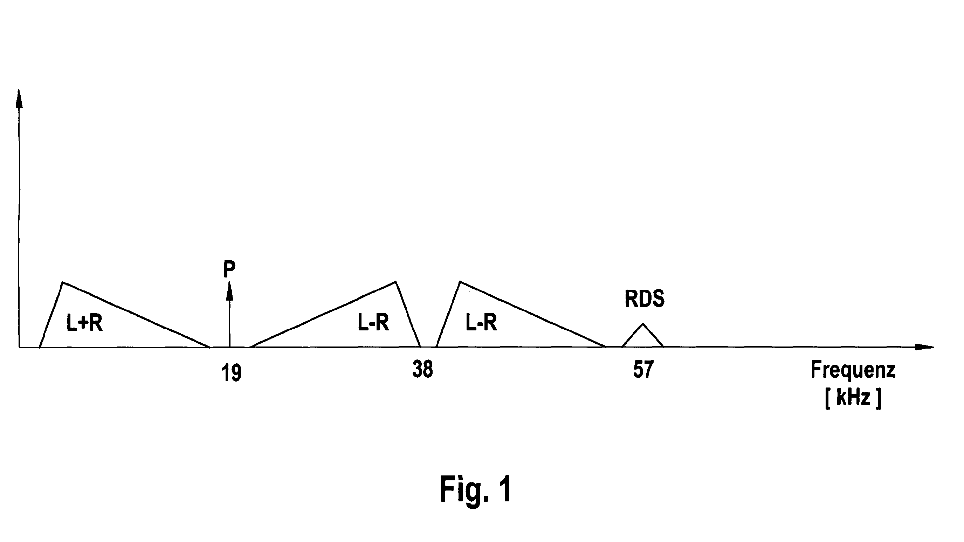

Die Figur 1 lässt das Frequenzband eines Stereo-Multiplexsignals, auch MPX genannt, erkennen. Diese MPX-Signal wird bei FM-Aussendungen frequenzmoduliert. Es wird deutlich, dass ein Summensignal L+R im Tonfrequenzband von 30 Hz bis 15 kHz übertragen wird, das addierte Audiosignale von einem linken und rechten Kanal beinhaltet. Weiterhin wird als Hilfssignal ein aus Subtraktion der Audiosignale eines linken und rechten Kanals gewonnenes Differenzsignal L-R übertragen, das mit einem Hilfsträger von 38 kHz gemischt wird. Der Hilfsträger wird bei der Modulation unterdrückt und es erfolgt eine Übertragung des Hilfsträgers als Pilotton P auf der halben Frequenz von 19 kHz. Der Pilotton P ermöglicht somit die Rückgewinnung des Hilfsträgers im Empfänger für das Differenzsignal L-R.

Weiterhin wird eine Verkehrsfunk-Kennfrequenz auf einer Frequenz von 57 kHz übertragen, die eine Verkehrsfunkdetektion ermöglicht. Auf diese Verkehrfunk-Kennfrequenz sind Radio-Daten-System-Informationen in Form von digitalen Datenblöcken aufmoduliert, die mit dem sogenannten Radio-Daten-System RDS normiert sind.

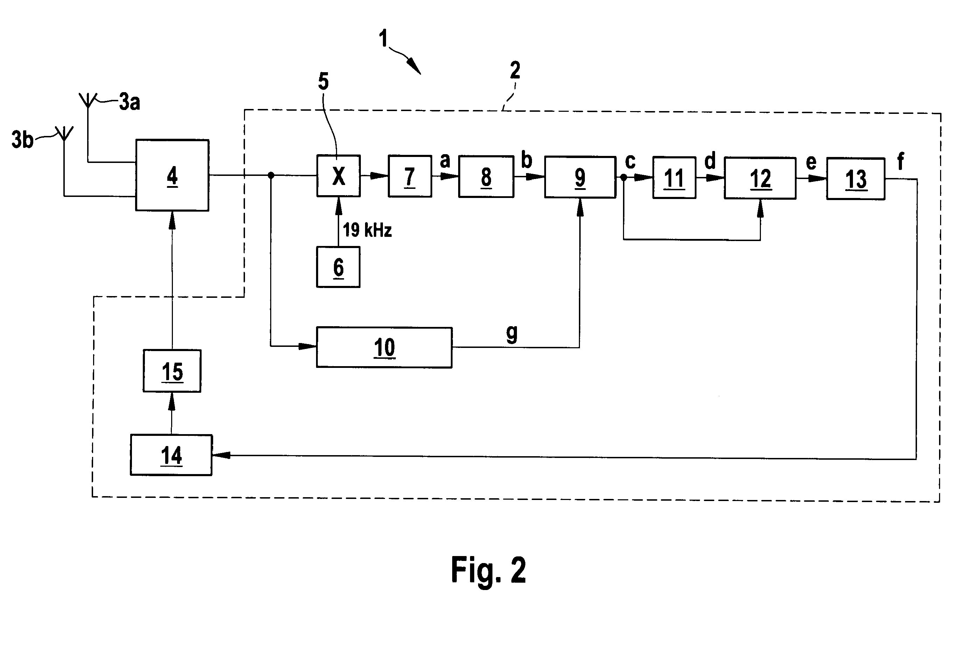

Die Figur 2 lässt ein Blockschaltbild eines FM-Empfangsgerätes 1 mit einer Ausführungsform eines erfindungsgemäßen Störungsdetektors 2 erkennen. Das FM-Empfangsgerät 1 hat zwei Antennen 3a, 3b, die an einen digitalen Richtantennenbaustein 4 angeschlossen sind, um durch Kombination der beiden Antennensignale eine Richtwirkung zu erzielen. Damit wird ein Ausblenden von Störsendern ermöglicht.

Es ist offensichtlich, dass gleichermaßen auch mehr als zwei Antennen 3 eingesetzt werden können.

Das aus dem digitalen Richtantennenmodul 4 gewonnene demodulierte MPX-Signal wird in einem Mischer 5 mit einem aus der Frequenz eines Quarzoszillators 6 abgeleiteten 19 kHz-Signals gemischt. Da die Frequenz des Pilottons P und die Frequenz des im Empfangsgerät 1 erzeugten 19 kHz-Signals nicht exakt gleich sind, wird nach der Mischung und einer Tiefpass-Filterung mit einem Tiefpassfilter 7 eine Pilottonablage (a) als Differenz zwischen dem Pilotton P und dem im Empfänger erzeugten 19 kHz-Signal gewonnen. Die Pilottonablage liegt in der Größenordnung von einigen Hertz, so dass der erste Tiefpass-Filter 7 auf diese Größenordnung von zum Beispiel 10 Hz eingestellt werden sollte.

Um einen der Periodenlänge dieser Pilottonablage (a) proportionalen Pilottonablagewert (b) zu messen, wird mittels eines Zählers 8 der Abstand zweier Nulldurchgänge der Pilottonablage (a) ermittelt. Dabei wird der Zähler 8 beim Erreichen eines Nulldurchgangs gestartet und beim Durchlaufen des nächsten Nulldurchgangs ausgewertet und erneut gestartet.

Der Zähler 8 wird in einem Auswertemodul 9 ausgewertet. Hierzu ist das Auswertemodul 9 mit einem herkömmlichen Empfangsqualitätsdetektor 10 verbunden und wird von diesem so gesteuert, dass der aktuell ermittelte Pilottonablagewert (b) verworfen wird, wenn durch den Empfangsqualitätsdetektor 10 eine nicht durch Gleichkanalempfang hervorgerufene Störung, wie zum Beispiel eine Mehrwegeausbreitung oder Nachbarkanäle erkannt wurden. Damit wird sichergestellt, dass nur Unterschiede der Pilottonablage (b) ausgewertet werden, die durch Gleichkanalempfang hervorgerufen wurden.

Der auf einer Gleichkanalstörung beruhende Pilottonablagewert (c) wird mit einem Tiefpassfilter 11 im Bereich von wenigen Hertz, zum Beispiel im Frequenzbereich von 0 bis 50 Hz tiefpassgefiltert, um einen sich nur sehr langsam ändernden Sollwert (d) zu erhalten, der mit dem Pilottonablagewert (c) in einem Vergleicher 12 verglichen wird. Wenn die Differenz (e) zwischen Pilottonablagewert (c) und Sollwert (d) einen vorgegebenen Toleranzbereich des Sollwerts (d), zum Beispiel 5%, überschreitet, wird ein Zähler 13 um einen bestimmten Wert von zum Beispiel 1 inkrementiert. Wenn der Wert der Differenz (e) innerhalb des Toleranzbereichs liegt, so wird der Zähler 13 um einen bestimmten Betrag von zum Beispiel 1 dekrementiert. Der Zähler 13 kann allerdings nicht kleiner als Null werden, d. h. keine negativen Werte annehmen.

Der vom Zähler 13 erzeugte Kontrollwert (f) wird in einem Schwellwertschalter 14 mit einem geeignet gewählten Schwellwert von zum Beispiel 10 verglichen. Wenn der Kontrollwert (f) den vorgegebenen Schwellwert erreicht, wird das adaptive, die resultierende Antennencharakteristik beeinflussende digitale Richtantennenmodul 4 für eine von einem Zeitgeber 15 vorgegebene Zeitdauer von zum Beispiel einer Minute deaktiviert. Während dieser Zeit wird die Ermittlung der Pilottonablage (a) nicht weiter fortgeführt und der Zähler 13 auf Null zurückgesetzt. Weiterhin wird das FM-Empfangsgerät 1 für diese Zeit mit einer vorgegebenen Charakteristik auf Mono-Wiedergabe geblendet und eine Absenkung der Höhenwiedergabe aktiviert, da aufgrund der detektierten Gleichkanalstörung Empfangsstörungen zu erwarten sind. Um die bestmögliche Wiedergabe des Nutzsenders zu erzielen, wird außerdem überwacht, ob unter Ausnutzung der RDS-Informationen eine der Empfangsantennen 3a, 3b in Bezug auf die Gleichkanalstörung als ungestörter ausgemacht werden kann, um die entsprechende Empfangsantenne für den Empfangspfad des FM-Empfangsgerätes 1 zu verwenden und die andere Empfangsantenne 3 mit dem gestörteren Rundfunksignal abzuschalten.

Sofern sich über einen längeren Zeitraum von zum Beispiel 180 Sekun- den ein konstanter, vom aktuellen Sollwert (d) abweichender Pilottonablagewert (c) ergibt, hat sich die Empfangssituation geändert und ein anderer Sender als der Nutzsender ist dauerhaft empfangbar. Dann ist eine weitere Abschaltung des digitalen Richtantennenmoduls nicht sinnvoll, so dass in diesem Fall der Sollwert (d) mit dem aktuellen Pilottonablagewert (c) vorgeladen wird.

Wenn die Frequenz des Nutzsenders zum Beispiel durch den Eingriff des Benutzers oder durch einen Sprung auf eine Alternativfrequenz verändert wird, muss der Sollwert (d) auf den aktuellen Pilottonablagewert (c) zurückgesetzt werden. Außerdem muss die Ermittlung des Sollwertes (d) erst für einen bestimmten Zeitraum einschwingen.

Bei einem kurzfristigen Sprung auf eine andere Empfangsfrequenz, zum Beispiel zur Bewertung einer Alternativfrequenz, und einem anschließenden Rücksprung auf die ursprüngliche Empfangsfrequenz wird der Sollwert (d) auf seinem Wert eingefroren und die Auswertung der Pilottonablage (a) erst wieder gestartet, wenn das FM-Empfangsgerät 1 wieder auf den Nutzsender abgestimmt ist.

## Patentansprüche

1. FM-Empfangsgerät (1) für frequenzmodulierte FM Rundfunksignale, die einen Pilotton (P) auf einer definierten Frequenz haben, wobei das FM-Empfangsgerät eingerichtet ist, das FM Rundfunksignal zu demodulieren, **gekennzeichnet durch** einen Störungsdetektor (2), der zur Detektion einer Empfangsstörung aus einer Abweichung einer Pilottonablage (a) von einem Sollwert (d) eingerichtet ist, wobei die Pilottonablage (a) die Differenz des demodulierten Pilottons (P) mit einer Pilotton-Referenzfrequenz Referenzzeichen "19 KHZ" in Fig 2 ist, und der störungsdetektor einen auf die definierte einem Frequenz einstellbaren Oszillator (6) beinhaltet, der zur Erzeugung der Pilotton-Referenzfrequenz Referenzzeichen "19 KHZ" in Fig.2 eingerichtet ist. eingerichtet ist.

2. FM-Empfangsgerät (1) nach Anspruch 1, **gekennzeichnet dadurch dass** der störungsdetektor weiterhin einen Mischer (5) zum Mischen des demodulierten Rundfunksignals mit der Pilotton-Referenzfrequenz (Referenzzeichen "19 KHZ" in Fig.2) zur Gewinnung eines gemischten Rundfunksignals beinhaltet.

3. FM-Empfangsgerät (1) nach Anspruch 2, **gekennzeichnet dadurch dass** der störungsdetektor weiterhin einen ersten Tiefpassfilter (7) zur Tiefpassfilterung des gemischten Rundfunksignals beinhaltet, um die Pilottonablage (a) zu gewinnen.

4. FM-Empfangsgerät (1) nach Anspruch 3, **gekennzeichnet dadurch dass** der störungsdetektor weiterhin einen zweiten Tiefpassfilter (11) zur Tiefpassfilterung eines Signals repräsentativ für die Pilottonablage (a) beinhaltet, um einen Sollwert (d) zu erhalten.

5. FM-Empfangsgerät (1) nach Anspruch 4, **gekennzeichnet dadurch dass** der störungsdetektor weiterhin einen Taktzähler (8) zur Bestimmung eines zu der Periodenlänge der Pilottonablage (a) proportionalen Wertes beinhaltet, und der Taktzähler (8) so eingerichtet ist, bei einem Nulldurchgang der Pilottonablage (a) zu starten und bei einem folgenden Nulldurchgang zu stoppen, die gezählten Takte auszulesen und den Taktzähler (8) auf Null zu setzen.

6. FM-Empfangsgerät (1) nach Anspruch 5, **gekennzeichnet dadurch dass** der störungsdetektor weiterhin ein Auswertemodul (9) zum Auswerten der gezählten Takte das Taktzählers als Pilottonablagewerte (c) und einen Empfangsqualitätsdetektor (10) zur Detektion weiterer Empfangsstörungen beinhaltet, wobei der Empfangsquatitätsdetektor (10) mit dem Auswerte modul (9) verbunden ist und das Auswerte modul derart eingerichtet ist, dass ein aktuell ermittelter Pilottonablagewert (c) nicht berücksichtigt wird, wenn eine Empfangsstörung durch den Empfangsqualitätsdetektor (10) detektiert wird.

7. FM-Empfangsgerät (1) nach Anspruch 6, **dadurch gekennzeichnet, dass** der Störungsdetektor (2) einen weiteren Zähler (13) zur Erzeugung eines Kontrollwertes (f) hat, wobei der Zähler (13) derart eingerichtet ist, dass er inkrementiert wird, wenn der Pilottonablagewert (c) außerhalb eines vorgegebenen Toleranzbereiches des Sollwertes (d) liegt, und dekrementiert wird, wenn der Pilottonablagewert (c) innerhalb des vorgegebenen Toleranzbereiches des Sollwertes (d) liegt, und dass der Störungsdetektor (2) eingerichtet ist, eine Entstörmaßnahme des FM-Empfangsgerätes (1) einzuleiten, wenn der Kontrollwert (f) einen definierten Schwellwert überschreitet.

8. FM-Empfangsgerät (1) nach Anspruch 7 **dadurch gekennzeichnet, dass** des FM-Empfangsgerät weiterhin ein Richtantennen modul (4) zur Erzielung einer Richtwirkung durch Kombination mehrerer Antennensignale über mindestens zwei Empfangsantennen (3a, 3b) beinhaltet wobei der störungsdetektor eingerichtet ist, als Entstörmaßnahme eine Deaktivierung des Richtantennenmoduls für eine definierte Zeitdauer, ein Einstellen des FM-Empfangsgerätes (1) auf Mono-Wiedergabe des Rundfunksignals und ein Absenken der Höhenwiedergabe und ein Zurücksetzen des kontrollwerts (f) wieder auf Null einzuleiten.

9. FM-Empfangsgerät (1) nach einem der vorhergehenden Ansprüche, **dadurch gekennzeichnet, dass** des FM-Empfangsgerät weiterhin ein Richtantennenmodul (4) zur Erzielung einer Richtwirkung durch Kombination mehrerer Antennensignale über mindestens zwei Empfangsantennen (3a, 3b), beinhaltet wobei das FM-Empfangsgerät (1) zur Auswertung von Radio-Daten-System-Informationen (RDS) ausgebildet ist, um diejenige Empfangsantenne (3) der mindestens zwei Empfangsantennen (3a, 3b) zu ermitteln, die im Bezug auf eine Empfangsstörung das ungestörteste Rundfunksignal empfängt, wobei dann nur das von der ermittelten Empfangsantenne (3) empfangene Rundfunksignal im Empfangspfad des FM-Empfangsgerätes (1) weitergenutzt wird.

10. FM-Empfangsgerät (1) nach einem der Ansprüche 5 bis 8, **dadurch gekennzeichnet, dass** der störungsdetektor eingerichtet ist, den Sollwert auf den Pilottonablagewert (c) zu setzen, wenn der Pilottonablagewert (c) über einen festgelegten Zeitraum vom Sollwert (d) abweicht oder eine eingestellte Empfangsfrequenz für das Rundfunksignal verändert wurde

## Claims

1. FM receiver (1) for frequency-modulated FM broadcast radio signals which have a pilot tone (P) on a defined frequency, where the FM receiver is set up to demodulate the FM broadcast radio signal, **characterized by** an interference detector (2) which is set up to detect reception interference from a discrepancy between a pilot tone error (a) and a nominal value (d), the pilot tone error (a) being the difference between the demodulated pilot tone (P) and a pilot tone reference frequency (reference symbol "19 kHz" in Figure 2), and the interference detector containing an oscillator (6) which can be set to the defined frequency and which is set up to produce the pilot tone reference frequency (reference symbol "19 kHz" in Figure 2).

2. FM receiver (1) according to Claim 1, **characterized in that** the interference detector also contains a mixer (5) for mixing the demodulated broadcast radio signal with the pilot tone reference frequency (reference symbol "19 kHz" in Figure 2) in order to obtain a mixed broadcast radio signal.

3. FM receiver (1) according to Claim 2, **characterized in that** the interference detector also contains a first low-pass filter (7) for low-pass filtering the mixed broadcast radio signal in order to obtain the pilot tone error (a).

4. FM receiver (1) according to Claim 3, **characterized in that** the interference detector also contains a second lows-pass filter (11) for low-pass filtering a signal representing the pilot tone error (a) in order to obtain a nominal value (d).

5. FM receiver (1) according to Claim 4, **characterized in that** the interference detector also contains a clock cycle counter (8) for determining a value which is proportional to the period length of the pilot tone error (a), and the clock cycle counter (8) is set up to start upon a zero crossing in the pilot tone error (a) and to stop upon a subsequent zero crossing, to read the clock cycles counted and to set the clock cycle counter (8) to zero.

6. FM receiver (1) according to Claim 5, **characterized in that** the interference detector also contains an evaluation module (9) for evaluating the clock cycles counted by the clock cycle counter as pilot tone error values (c) and a reception quality detector (10) for detecting further reception interference, where the reception quality detector (10) is connected to the evaluation module (9) and where the evaluation module is set up such that a currently ascertained pilot tone error value (c) is not taken into account if reception interference is detected by the reception quality detector (10).

7. FM receiver (1) according to Claim 6, **characterized in that** the interference detector (2) has a further counter (13) for producing a control value (f), where the counter (13) is set up such that it is incremented if the pilot tone error value (c) is outside a prescribed tolerance range for the nominal value (d), and is decremented if the pilot tone error value (c) is inside the prescribed tolerance range for the nominal value (d), and **in that** the interference detector (2) is set up to initiate an interference suppression measure in the FM receiver (1) if the control value (f) exceeds a defined threshold value.

8. FM receiver (1) according to Claim 7, **characterized in that** the FM receiver also contains a directional antenna module (4) for achieving a directional action by combining a plurality of antenna signals using at least two reception antennas (3a, 3b), where the interference detector is set up to initiate, as interference suppression measure, deactivation of the directional antenna module for a defined period, setting of the FM receiver (1) to mono reproduction of the broadcast radio signal and reduction of the treble reproduction and resetting of the control value (f) to zero.

9. FM receiver (1) according to one of the preceding claims, **characterized in that** the FM receiver also contains a directional antenna module (4) for achieving a directional action by combining a plurality of antenna signals using at least two reception antennas (3a, 3b), where the FM receiver (1) is designed to evaluate Radio Data System (RDS) information in order to ascertain that reception antenna (3) from the at least two reception antennas (3a, 3b) which receives the broadcast radio signal with the least reception interference, in which case only the broadcast radio signal received by the ascertained reception antenna (3) continues to be used in the reception path of the FM receiver (1).

10. FM receiver (1) according to one of Claims 5 to 8, **characterized in that** the interference detector is set up to set the nominal value to the pilot tone error value (c) if the pilot tone error value (c) differs from the nominal value (d) over a stipulated period or a set reception frequency for the broadcast radio signal has been altered.

## Revendications

1. Récepteur MF, 1 pour des signaux radiophoniques à modulation de fréquence MF, ayant un son pilote P d'une fréquence définie, le récepteur MF étant conçu pour démoduler le signal radio MF,
**caractérisé par**
un détecteur de parasites 2 pour détecter les parasites de réception à partir d'une déviation d'une position de son pilote (a) par rapport à une valeur de consigne (d), la position du son pilote (a) étant la différence du son pilote démodulé (P) et d'une fréquence de référence de son pilote (référence « 19 KHZ » à la figure 2) et d'un détecteur de perturbation avec un oscillateur 6 réglé sur une fréquence définie, pour générer la fréquence de référence de son pilote (référence « 19 KHZ » à la figure 2).

2. Récepteur radio MF 1 selon la revendication 1,
**caractérisé en ce que**
le détecteur de parasites comporte un mélangeur 5 pour mélanger le signal radiophonique démodulé à la fréquence de référence de son pilote (référence « 19 KHZ » à la figure 2) pour obtenir un signal radiophonique mélangé.

3. Récepteur selon la revendication 2,
**caractérisé par**
un module d'exploitation 9 pour exploiter les cadences comptées du compteur de cadences comme valeurs déposées du son pilote (c), avec un premier filtre passe-bas 7 pour filtrer le signal radiophonique mélangé, et obtenir le dépôt du son pilote (a).

4. Récepteur selon la revendication 3,
**caractérisé en ce que**
le détecteur de parasites comporte un second filtre passe-bas 11 pour assurer le filtrage passe-bas d'un signal représentatif du dépôt de son pilote (a) pour obtenir une valeur de consigne (d).

5. Récepteur selon la revendication 4,
**caractérisé en ce que**
le détecteur de parasites comporte en outre une horloge 8 pour déterminer une valeur proportionnelle à la durée de la période du dépôt de son pilote (a) et le compteur de cadence 8 est conçu pour démarrer lors du dépôt du son pilote (a) et s'arrêter lors du passage par zéro suivant, de lire les cadences comptées et de remettre à zéro le compteur de cadence 8.

6. Récepteur selon la revendication 5,
**caractérisé en ce que**
le détecteur de parasites comporte en outre un module d'exploitation 9 pour exploiter les cadences comptées par le compteur de cadence comme valeurs déposées (c) et un détecteur de qualité de réception 10 pour détecter d'autres perturbations de réception, le détecteur de qualité de réception 10 étant relié à un module d'exploitation 9 et ce module d'exploitation est conçu pour ne pas tenir compte de la valeur de dépôt de son pilote (c), actuelle déterminée si la perturbation de réception est détectée par le détecteur de qualité de réception 10.

7. Récepteur selon la revendication 6,
**caractérisé en ce que**
le détecteur de parasites 2 comporte un autre compteur 13 pour générer une valeur de contrôle (f), le compteur 13 étant conçu pour être incrémenté si la valeur de dépôt de son pilote (c) se situe à l'extérieur d'une plage de tolérance prédéfinie pour la valeur de consigne (d) et il est décrémenté si la valeur de son pilote (c) se situe dans la plage de tolérance prédéfinie de la valeur de consigne (d) et le détecteur de parasites 2 est conçu pour effectuer une mesure de déparasitage du récepteur MF 1 si la valeur de contrôle (f) dépasse un seuil défini.

8. Récepteur selon la revendication 7,
**caractérisé en ce qu'**
il comporte en outre un module d'antenne directionnelle 4 pour réaliser un effet directionnel par la combinaison de plusieurs signaux d'antennes avec au moins deux antennes 3a, 3b, le détecteur de parasites étant conçu pour prendre comme mesure de déparasitage, une neutralisation du module d'antenne directionnelle pour une durée définie, un réglage du récepteur MF1 sur une reproduction mono du signal radiophonique et une réduction du niveau de reproduction et une remise à zéro de la valeur de contrôle (f).

9. Récepteur selon l'une des revendications précédentes,
**caractérisé en ce que**
le récepteur MF comporte un module d'antenne directionnelle 4 pour générer un effet directionnel par la combinaison de plusieurs signaux d'antenne, par au moins deux antennes de réception 3a, 3b, le récepteur MF 1 étant réalisé pour exploiter des informations du système de données radio (RDS) pour qu'au moins celle des antennes de réception 3 d'au moins deux antennes de réception 3a, 3b qui, par rapport à un parasite de réception, reçoit le signal radio non perturbé et continu alors d'utiliser seulement le signal radiophonique reçu par l'antenne de réception déterminée (3) dans le chemin de réception du récepteur MF1.

10. Récepteur selon l'une des revendications 3 à 8,
**caractérisé en ce que**
le détecteur de parasites est conçu pour fixer la valeur de consigne sur la valeur de dépôt de son pilote (c) si cette valeur de dépôt de son pilote (c) dévie de la valeur de consigne (d) pendant un intervalle de temps fixé ou si une fréquence de réception réglée a été modifiée pour le signal radiophonique.
